# EUROPÄISCHE PATENTSCHRIFT

(11) **EP 1 935 750 B1**
(45) Veröffentlichungstag und Bekanntmachung des Hinweises auf die Patenterteilung: **21.10.2009**
(21) Anmeldenummer: 07023262.4
(22) Anmeldetag: 30.11.2007
(51) Int. Cl.: B62B 3/06

(54) **Hubwagenflotte**
Elevating truck fleet
Flotte de chariots élévateurs

(30) Priorität: 22.12.2006 DE 102006061148
(43) Veröffentlichungstag der Anmeldung: 25.06.2008
(73) Patentinhaber: OM Carrelli Elevatori S.p.A., 20020 Lainate (MI) (IT)
(72) Erfinder: Mariotti, Fabio, 42016 Guastalle (IT); Mihajlovic, Goran, 20025 Legnano (MI) (IT)
(74) Vertreter: Geirhos, Johann

(56) Entgegenhaltungen:
- EP-A- 1 275 572
- DE-U1- 20 304 157
- FR-A- 2 810 613
- US-A1- 2006 181 039

## Beschreibung

Die Erfindung betrifft eine Hubwagenflotte, bei der jeder Hubwagen einen Antriebsteil und einen relativ zum Antriebsteil anhebbaren Lastteil aufweist, wobei der Lastteil zwei Radarme aufweist, die mit jeweils mindestens einer Lastrolle versehen sind, wobei zum Anheben des Lastteils jeweils ein mit der Lastrolle in Wirkverbindung stehendes Hebelsystem vorgesehen ist, das einen Dreieckshebel aufweist, der am Lastteil und am Antriebsteil gelenkig gelagert ist, wobei für die verschiedenen Hubwagen der Hubwagenflotte identische Dreieckshebel vorgesehen sind.

Eine gattungsgemäße Hubwagenflotte ist aus der EP 1 275 572 A2 bekannt. Um eine Hubwagenflotte mit verschiedenen Hubwagen herzustellen, die unterschiedliche Radarmabstände aufweisen, ist das Antriebsteil mit mehreren seitlich beabstandeten Lageraufnahmen versehen. In diese Lageraufnahmen kann ein für alle Hubwagen der Hubwagenflotte identischer Dreieckshebel, der mit den an den Radarmen des Lastteils angeordneten Lastrollen über eine Stange in Wirkverbindung steht, in verschiedenen Positionen angeordnet werden. Bei der EP 1 275 572 A2 ist es möglich, mit drei voneinander beabstandeten Lageraufnahmen am Antriebsteil den Dreieckshebel an drei verschiedenen Positionen zu montieren, wodurch eine Hubwagenflotte mit drei Hubwagen, die unterschiedlichen Radarmabständen aufweisen, hergestellt werden kann.

Bei der aus der EP 1 275 572 A2 bekannten Hubwagenflotte weist jedoch das Antriebsteil durch die Hohe Anzahl von Lageraufnahmen einen hohen Bauaufwand und somit einen hohen Herstellaufwand auf.

Der vorliegenden Erfindung liegt die Aufgabe zugrunde, eine aus mehreren Hubwagen mit unterschiedlichen Radarmabständen bestehende Hubwagenflotte der eingangs genannten Gattung zur Verfügung zu stellen, die einen geringen Bauaufwand und Herstellaufwand aufweist.

Diese Aufgabe wird erfindungsgemäß dadurch gelöst, dass am Antriebsteil eine einzige Lageraufnahme für den Dreieckshebel ausgebildet ist, wobei der Dreieckshebel in verschiedenen Hubwagen der Hubwagenflotte mit unterschiedlichen Radarmabständen in verschiedenen Montagepositionen an der Lageraufnahme montiert ist. Erfindungsgemäß ist somit am Antriebsteil des Hubwagens für den Dreieckshebel lediglich eine einzige Lageraufnahme ausgebildet, wobei verschiedene Radarmbreiten für unterschiedliche Hubwagen der Hubwagenflotte durch unterschiedliche Montagepositionen des identischen Dreieckshebels erzielt werden können. Das Antriebsteil, weist somit bedingt durch lediglich eine am Antriebsteil auszubildende Lageraufnahme für den Dreieckshebel einen geringen Bauaufwand und Herstellaufwand auf, wodurch eine Hubwagenflotte mit Hubwagen, die unterschiedliche Radarme aufweisen, auf einfache Weise mit geringem Herstellaufwand und Bauaufwand erzielbar ist.

Gemäß einer Ausgestaltungsform der Erfindung ist am Dreieckshebel ein mit einer Lagerbohrung versehener Aufnahmeflansch, ein mit einer Lagerbohrung versehener erster Befestigungsflansch und ein mit einer Lagerbohrung versehener zweiter Befestigungsflansch ausgebildet, wobei der Dreieckshebel mittels des Aufnahmeflansches an der Lageraufnahme befestigbar ist, der Dreieckshebel mittels des ersten Befestigungsflansches oder des zweiten Befestigungsflansches am Lastteil gelenkig lagerbar ist und an dem zweiten Befestigungsflansches oder dem ersten Befestigungsflansches ein mit der Lastrolle in Wirkverbindung stehendes Gestänge befestigbar ist. Mit einem derartigen am Antriebsteil und am Lastteil gelenkig gelagerten Dreieckshebel kann über ein Gestänge die Lastrolle auf einfache Weise betätigt werden.

Der Befestigungsflansch für das mit der Lastrolle in Wirkverbindung stehende Gestänge ist gemäß einer bevorzugten Ausführungsform der Erfindung seitlich versetzt zu dem Aufnahmeflansch angeordnet. Durch die seitlich versetzte und somit gekröpfte Anordnung des Aufnahmeflansches und des Befestigungsflansches können durch eine um 180° Grad verdrehte Montage und eine seitlich versetzte Montage des Dreieckshebels an der Lageraufnahme unterschiedliche Radarmabstände auf einfache Weise erzielt werden.

Besondere Vorteile ergeben sich, wenn gemäß einer bevorzugten Weiterbildung der Erfindung der Dreieckshebel als gleichschenkliges Dreieck ausgebildet ist. Durch die Ausbildung des Dreieckshebels als gleichschenkliges Dreieck wird auf einfache Weise eine um 180° Grad verdrehte Montage des Dreieckshebels an der Lageraufnahme des Antriebsteils ermöglicht.

Eine derartige Ausbildung des Dreieckshebels als gleichschenkliges Dreieck ist auf einfache Weise erzielbar, wenn die Lagerbohrung des Aufnahmeflansches von der Lagerbohrung des ersten Befestigungsflansches und die Lagerbohrung des Aufnahmeflansches von der Lagerbohrung des zweiten Befestigungsflansches gleiche Abstände aufweisen.

Die Lageraufnahme ist gemäß einer vorteilhaften Ausgestaltungsform der Erfindung von einem inneren und einem äußeren Lagerflansch gebildet, wobei der Aufnahmeflansch des Dreieckshebel von einer ersten Aufnahmeplatte und einer zweiten, von der ersten Aufnahmeplatte beabstandeten Aufnahmeplatte gebildet ist. Eine derartige Lageraufnahme weist einen geringen Bauaufwand und Herstellaufwand auf, wobei der von zwei Aufnahmeplatten gebildete Aufnahmeflansch auf einfache Weise in verschiedenen Montagepositionen an dem Lagerflanschen angeordnet werden kann.

Gemäß einer Ausgestaltungsform der Erfindung ist in einer ersten Montageposition des Dreieckshebels die erste Aufnahmeplatte an der Innenseite des äußeren Lagerflansches und die zweite Aufnahmeplatte an der Innenseite des inneren Lagerflansches angeordnet. Hierdurch kann ein Hubwagen der Hubwagenflotte mit einem ersten Radarmabstand auf einfache Weise erzeugt werden.

Bei einer weiteren Ausgestaltungsform der Erfindung ist in einer zweiten Montageposition des Dreieckshebels die zweite Aufnahmeplatte an der Innenseite des äußeren Lagerflansches und die erste Aufnahmeplatte an der Innenseite des inneren Lagerflansches angeordnet. Durch diese Montageposition kann ein Hubwagen der Hubwagenflotte mit einem zweiten Radarmabstand auf einfache Weise hergestellt werden.

In einer dritten Montageposition des Dreieckshebels ist gemäß einer weiteren Ausgestaltungsform der Erfindung die zweite Aufnahmeplatte an der Außenseite des äußeren Lagerflansches und die erste Aufnahmeplatte an der Außenseite des inneren Lagerflansches angeordnet. Mit dieser Montageposition kann ein Hubwagen der Hubwagenflotte mit einem dritten Radarmabstand auf einfache Weise hergestellt werden.

Zudem kann gemäß einer Weiterbildung der Erfindung eine vierte Montageposition des Dreieckshebels erzielt werden, in der die erste Aufnahmeplatte an der Außenseite des äußeren Lagerflansches der Lageraufnahme und die zweite Aufnahmeplatte an der Außenseite des inneren Lagerflansches der Lageraufnahme angeordnet ist. Mit dieser Montageposition der Dreieckshebel kann ein Hubwagen mit einem vierten Radarmabstand auf einfache Weise hergestellt werden.

Besondere Vorteil ergeben sich, wenn an der am Antriebsteil angeordneten Lageraufnahme eine erste Lagerbohrung und eine zweite von der ersten Lagerbohrung vertikal beabstandete Lagerbohrung ausgebildet ist, an denen der Dreieckshebel befestigbar ist. Hierdurch ist es auf einfache Weise möglich, die Anlenkung des als gleichschenkligen Dreieck ausgebildeten Dreieckshebels am Antriebsteil derart zu verändern, dass als Gestänge zur Betätigung der Lastrollen eine Druckstange oder eine Zugstange verwendet werden kann. In Abhängigkeit der Länge der Radarme kann somit ein als Zugstange oder Druckstange ausgebildetes Gestänge verwendet werden, beispielsweise bei kurzen Radarmen eine Druckstange und bei langen Radarmen eine Zugstange.

Weitere Vorteile und Einzelheiten der Erfindung werden anhand der in den schematischen Figuren dargestellten Ausführungsbeispiele näher erläutert. Hierbei zeigt
- Figur 1: eine erste Ausführungsform eines Hubwagens einer erfindungsgemäßen Hubwagenflotte in einer Seitenansicht,
- Figur 2: eine zweite Ausführungsform eines Hubwagens einer erfindungsgemäßen Hubwagenflotte in einer Seitenansicht,
- Figur 3: die Seitenansicht eines Dreieckshebels in einer vergrößerten Darstellung,
- Figur 4: eine Draufsicht eines ersten Hubwagens einer erfindungsgemäßen Flurförderzeugflotte,
- Figur 5: eine Draufsicht eines zweiten Hubwagens einer erfindungsgemäßen Flurförderzeugflotte und
- Figur 6: eine Draufsicht eines dritten Hubwagens einer erfindungsgemäßen Flurförderzeugflotte.

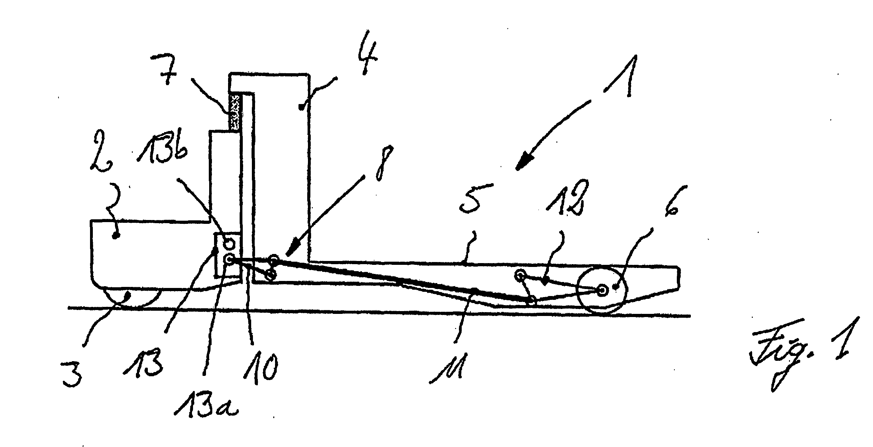

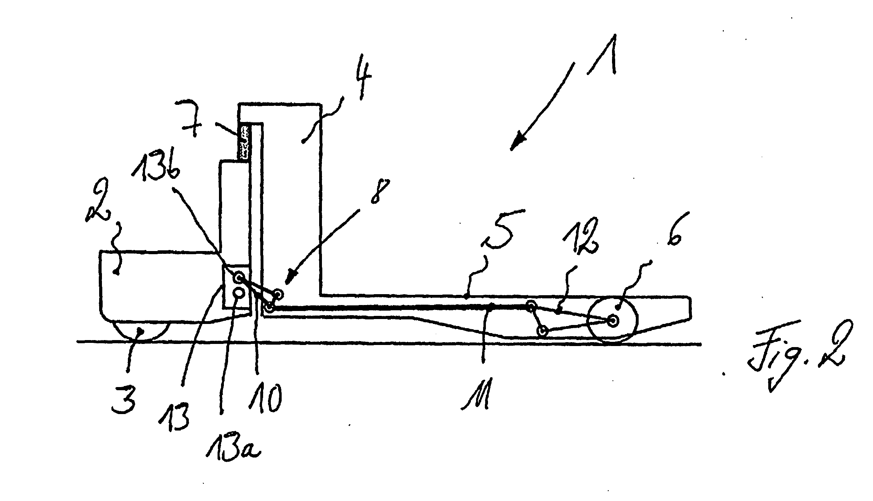

In den Figuren 1 und 2 ist jeweils ein Hubwagen 1 einer erfindungsgemäßen Hubwagenflotte in einer Seitenansicht dargestellt. Der Hubwagen 1 weist einen Antriebsteil 2, der mit einem Antriebsrad 3 versehen ist, und einen relativ zum Antriebsteil 2 anhebbaren Lastteil 4 auf. Der Lastteil 4 umfasst zwei seitlich beabstandete Radarme 5, die sich mittels Lastrollen 6 auf der Fahrbahn abstützen.

Zum Anheben des Lastteils ist ein Hydraulikzylinder 7 vorgesehen, der zwischen dem Antriebsteil 2 und dem Lastteil 4 angeordnet ist, wobei mittels eines Hebelsystems 8 die Lastrollen 6 anhebbar sind. Das Hebelsystem 8 weist im Bereich jedes Radarms 5 jeweils einen Dreieckshebel 10 auf, der am Antriebsteil 2 und am Lastteil 4 gelenkig befestigt ist. Das Hebelsystem 8 umfasst weiterhin ein Gestänge 11, das am Dreieckshebel 10 gelenkig befestigt ist und mit einem Kniehebel 12 in Verbindung steht, der am Radarm 5 gelenkig gelagert ist und die Laufrolle 6 trägt. Am Antriebsteil 4 ist zur gelenkigen Lagerung des Dreieckshebels 10 im Bereich jedes Radarmes 5 jeweils eine Lageraufnahme 13 ausgebildet.

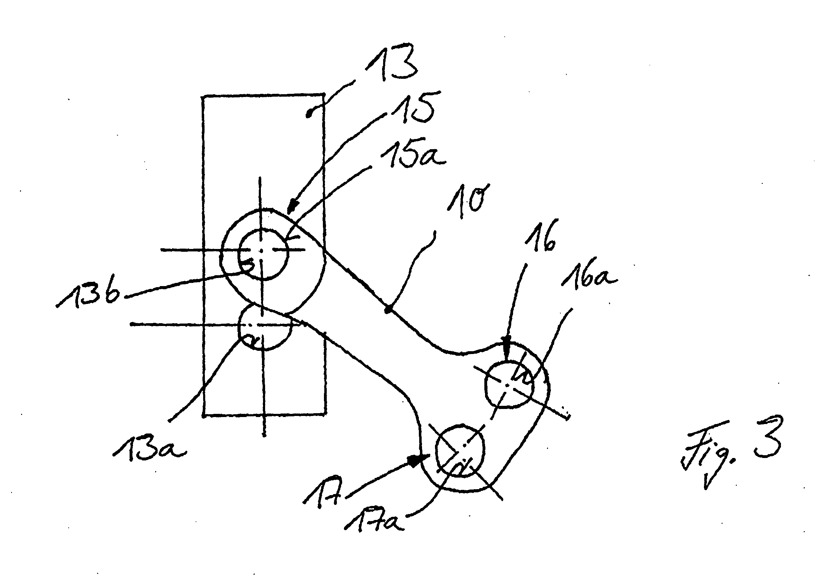

In der Figur 3 ist die am Antriebsteil 2 angeordnete Lageraufnahme 13 und der Dreieckshebel 10 in einer vergrößerten Darstellung als Seitenansicht dargestellt. Die Lageraufnahme 13 weist eine erste Lagerbohrung 13a und eine vertikal beabstandete zweite Lagerbohrung 13b auf. Der Dreieckshebel 10 weist einen mit einer Lagerbohrung 15a versehenen Aufnahmeflansch 15 auf, mittels dem der Dreieckshebel 10 an der Lagerbohrungen 13a bzw. 13b der Lageraufnahme 13, beispielsweise mittels eines Lagerbolzens, gelenkig befestigbar ist. Am Dreieckshebel 10 ist ein erster Befestigungsflansch 16 ausgebildet, der mit einer Lagerbohrung 16a versehen ist. Zudem ist am Dreieckshebel 10 ein zweiter Befestigungsflansch 17 ausgebildet, der von einer Lagerbohrung 17a gebildet ist.

Der Dreieckshebel 10 ist als gleichschenkliges Dreieck ausgebildet, wobei der Abstand der Lagerbohrung 15a des Aufnahmeflansches 15 von der Lagerbohrung 16a des ersten Befestigungsflansches 16 und der Abstand der Lagerbohrung 15a des Aufnahmeflansches 15 von der Lagerbohrung 17a des zweiten Befestigungsflansches 17 gleich groß ist. Mittels des ersten Befestigungsflansches 16 ist der Dreieckshebel 10 am Lastteil 4, beispielsweise mittels eines Lagerbolzens, gelenkig lagerbar oder das Gestänge 11 am Dreieckshebel 10 befestigbar, beispielsweise mittels eines Lagerbolzens. Entsprechend ist der Dreieckshebel 10 mittels des zweiten Befestigungsflansches 17 am Lastteil 4, beispielsweise mittels eines Lagerbolzens, gelenkig lagerbar oder am zweiten Befestigungsflansch 17 das Gestänge 11, beispielsweise mittels eines Lagerbolzens, befestigbar.

Bei dem in der Figur 1 dargestellten Hubwagen 1 ist der Dreieckshebel 10 mittels des Aufnahmeflansches 15 an der Lagerbohrung 13a der Lageraufnahme 13 gelenkig gelagert. Am Lastteil 4 ist der Dreieckshebel 10 mittels des zweiten Befestigungsflansches 17 gelenkig gelagert. An dem ersten Befestigungsflansch 16 des Dreieckshebels 10 ist das Gestänge 11 befestigt, das gemäß der Figur 1 als Zugstange zur Betätigung des Kniehebels 12 ausgebildet ist.

Bei dem in der Figur 2 dargestellten Hubwagen 1 ist der Dreieckshebel 10 mittels des Aufnahmeflansches 15 an der Lagerbohrung 13b der Lageraufnahme 13 gelenkig gelagert. Mittels des ersten Befestigungsflansches 16 ist der Dreieckshebel 10 am Lastteil 4 gelenkig befestigt. Das Gestänge 11 ist am zweiten Befestigungsflansch 17 des Dreieckshebels befestigt und als Druckstange zur Betätigung des Kniehebels 12 ausgebildet.

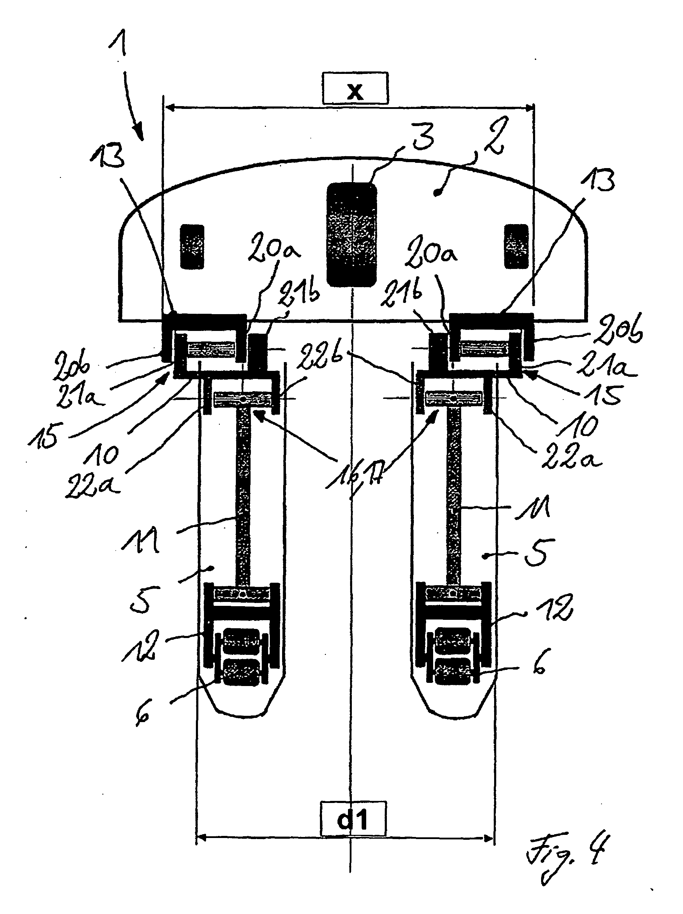

In den Figuren 4 bis 6 sind verschiedene Hubwagen 1 der Hubwagenflotte in einer Draufsicht dargestellt.

Am Antriebsteil 2 der Hubwagen 1 gemäß der Figuren 4 bis 6 ist im Bereich jedes Radarms 3 eine einzige Lageraufnahme 13 angeordnet, die von jeweils einem inneren Lagerflansch 20a und einen äußeren Lagerflansch 20b gebildet ist, die voneinander seitlich beabstandet sind und an denen die Lagerbohrungen 13a, 13b ausgebildet sind. Die beiden Lageraufnahmen 13 sind hierbei für alle Hubwagen 1 der Hubwagenflotte gemäß den Figuren 4 bis 6 mit einem Außenabstand X am Antriebsteil 2 angeordnet.

Der Aufnahmeflansch 15 der Dreieckshebel 10 ist von jeweils einer ersten Aufnahmeplatte 21 a und einer zweiten von der ersten Aufnahmeplatte 21 a seitlich beabstandeten Aufnahmeplatte 21 b gebildet, in denen die Lagerbohrung 15a ausgebildet ist. Die Befestigungsflansche 16, 17 mit den Lagerbohrungen 16a, 17a, mittels denen der Dreieckshebel 10 am Lastteil 4 gelenkig gelagert sind und die Gestänge 11 mit den Dreieckshebeln 10 verbindbar sind, sind an voneinander beabstandeten Lagerplatten 22a, 22b ausgebildet. Der Dreieckshebel 10 ist gekröpft gestaltet, wodurch die Befestigungsflansche 16,17 seitlich versetzt und somit seitlich beabstandet zu dem Aufnahmeflansch 15 an dem Dreieckshebel 10 angeordnet sind.

Bei dem in der Figur 4 dargestellten Hubwagen 1 der Hubwagenflotte sind die Dreieckshebel 10 in einer ersten Montageposition an den Lageraufnahmen 13 befestigt. Die erste Aufnahmeplatte 21 a des Aufnahmeflansches 15 ist hierbei an der Innenseite des äußeren Lagerflansches 20b der Lageraufnahme 13 und die zweite Aufnahmeplatte 21 b des Aufnahmeflansches 15 an der Innenseite des inneren Lagerflansches 20a der Lageraufnahme 13 angeordnet. Durch die gekröpfte Anordnung des Aufnahmeflansches 15 und der von den Lagerplatten 22a, 22b gebildeten Befestigungsflansche 16, 17 ist in dieser Montageposition der Dreieckshebel 10 ein minimaler Radarmabstand d1 der beiden Radarme 5 des Lastteils erzielbar.

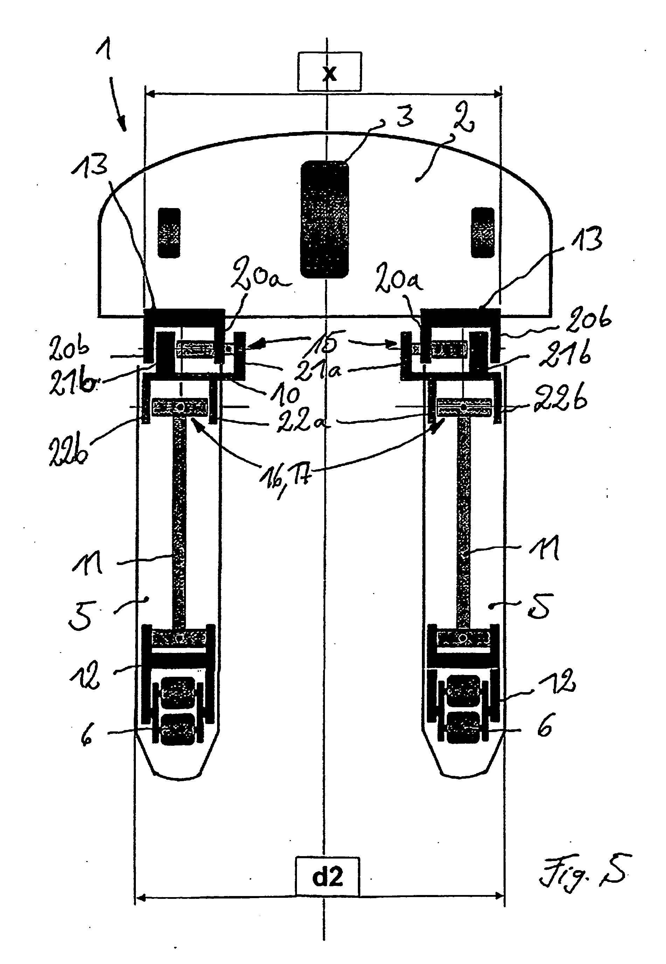

In der Figur 5 ist ein weiterer Hubwagen 1 der Hubwagenflotte dargestellt, wobei die Dreieckshebel 10 in einer zweiten Montageposition an den Lageraufnahmen 13 befestigt sind. Die Dreieckshebel 10 sind hierbei gegenüber der in der Figur 4 dargestellten Montageposition um 180° Grad gedreht an den Lageraufnahmen 13 befestigt. In dieser Montageposition der Dreieckshebels 10 ist die zweite Aufnahmeplatte 21 b des Aufnahmeflansches 15 an der Innenseite des äußeren Lagerflansches 20b der Lageraufnahme 13 und die erste Aufnahmeplatte 21a des Aufnahmeflansches 15 an der Innenseite des inneren Lagerflansches 20a der Lageraufnahme 13 angeordnet. Durch die gekröpfte Anordnung des Aufnahmeflansches 13 und der von den Lagerplatten 22a, 22b gebildeten Befestigungsflansche 16, 17 ist in dieser Montageposition ein mittlerer Radarmabstand d2 der beiden Radarme 5 des Lastteils 4 erzielbar.

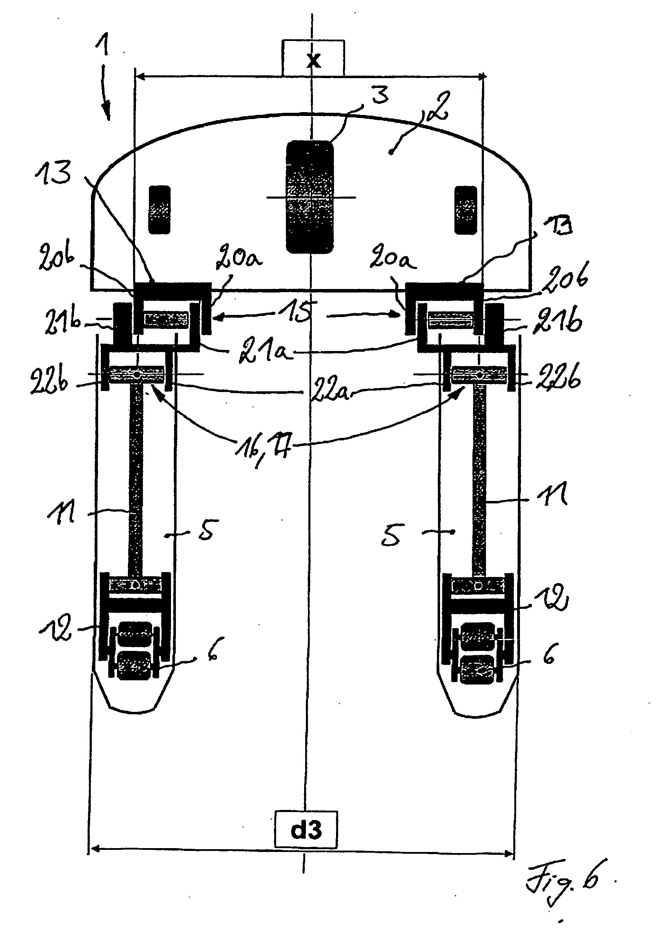

Bei dem in der Figur 6 dargestellten Hubwagen 1 der Hubwagenflotte befinden sich die Dreieckshebel 10 in einer dritten, gegenüber der in der Figur 5 dargestellten Montageposition seitlich verschobenen Montageposition. In dieser Montageposition ist die zweite Aufnahmeplatte 21 b des Aufnahmeflansches 15 an der Außenseite des äußeren Lagerflansches 20b der Lageraufnahme 13 und der erste Aufnahmeplatte 21a des Aufnahmeflansches 15 an der Außenseite des inneren Lagerflansches 20a der Lageraufnahme 13 angeordnet. In dieser Montageposition des Dreieckshebels 10 ist aufgrund der gekröpften Anordnung des Aufnahmeflansches 15 und der von den Lagerplatten 22a, 22b gebildeten Befestigungsflansche 16, 17 ein Hubwagen mit einem maximalen Radarmabstand d3 der beiden Radarme 5 des Lastteils 4 erzielbar.

Zudem ist eine nicht mehr dargestellte vierte Montageposition der Dreieckshebels 10 möglich, bei denen sich die Dreieckshebel 10 in einer gegenüber der Figur 4 dargestellten Montageposition seitlich verschobenen Montageposition befinden. In dieser vierten Montageposition ist die erste Aufnahmeplatte 21 a des Aufnahmeflansches 15 an der Außenseite des äußeren Lagerflansches 20b der Lageraufnahme 13 und die zweite Aufnahmeplatte 21 b des Aufnahmeflansches 15 an der Außenseite des inneren Lagerflansches 20a der Lageraufnahme 13 angeordnet, wobei ein Hubwagen mit einem zwischen dem Radarmabstand d1 gemäß der Figur 4 und dem Radarmabstand d2 gemäß der Figur 5 aufweisenden Radarmabstand gebildet werden kann.

Beim der erfindungsgemäßen Hubwagenflotte ist an den Antriebsteilen 2 der verschiedenen Hubwagen 1 für jeden Radarm 5 und somit für jeden Dreieckshebel 10 lediglich eine Lageraufnahme 13 anzuordnen. Durch die Ausgestaltung der für alle Hubwagen 1 der Hubwagenflotte identischen Dreieckshebel 10 als gleichschenklige Dreiecke kann der Dreieckshebel um 180° Grad gedreht an der Lageraufnahme 13 angeordnet werden. Durch zumindest eine zusätzliche seitlich verschobene Montageposition können somit bis zu vier Montagepositionen des Dreieckshebels 10 an der Lageraufnahme 13 auf einfache Weise erzielt werden, wodurch eine Hubwagenflotte mit bis zu vier Hubwagen, die bei identischen Antriebsteilen und identischen Dreieckshebeln unterschiedliche Radarmbreiten aufweisen, auf einfache Weise hergestellt werden kann. Durch die beiden Lagerbohrungen 13a, 13b in den Lageraufnahmen 13 ist zudem für jeden Radarmabstand die Ausgestaltung des Gestänges 11 als Zugstange oder als Druckstange ermöglicht, wodurch für verschiedene Längen der Radarme 5 vorteilhafte Gestänge verwendet werden können, beispielsweise bei kurzen Radarmlängen als Druckstangen ausgebildete Gestänge 11 und bei langen Radarmlängen bzw. hohen Traglasten des Hubwagens als Zugstangen ausgebildete Gestänge 11.

## Patentansprüche

1. Hubwagenflotte, bei der jeder Hubwagen einen Antriebsteil (2) und einen relativ zum Antriebsteil anhebbaren Lastteil (4) aufweist, wobei der Lastteil zwei Radarme (5) aufweist, die mit jeweils mindestens einer Lastrolle (6) versehen sind, wobei zum Anheben des Lastteils (4) jeweils ein mit der Lastrolle in Wirkverbindung stehendes Hebelsystem (8) vorgesehen ist, das einen Dreieckshebel (10) aufweist, der am Lastteil (4) und am Antriebsteil (2) gelenkig gelagert ist, wobei für die verschiedenen Hubwagen der Hubwagenflotte identische Dreieckshebel (10) worgesehen sind, **dadurch gekennzeichnet, dass** am Antriebsteil (2) eine einzige Lageraufnahme (13) für den Dreieckshebel (10) ausgebildet ist, wobei der Dreieckshebel (10) in verschiedenen Hubwagen (1) der Hubwagenflotte mit unterschiedlichen Radarmabständen (d1; d2; d3) in verschiedenen Montagepositionen an der Lageraufnahme (13) montiert ist.

2. Hubwagenflotte nach Anspruch 1, **dadurch gekennzeichnet, dass** am Dreieckshebel (10) ein mit einer Lagerbohrung (15a) versehener Aufnahmeflansch (15), ein mit einer Lagerbohrung (16a) versehener erster Befestigungsflansch (16) und ein mit einer Lagerbohrung (17a) versehener zweiter Befestigungsflansch (17) ausgebildet ist, wobei der Dreieckshebel (10) mittels des Aufnahmeflansches (15) an der Lageraufnahme (13) befestigbar ist, der Dreieckshebel (10) mittels des ersten Befestigungsflansches (16) oder des zweiten Befestigungsflansches (17) am Lastteil (4) gelenkig lagerbar ist und an dem zweiten Befestigungsflansches (17) oder dem ersten Befestigungsflansch (16) ein mit der Lastrolle (6) in Wirkverbindung stehendes Gestänge (11) befestigbar ist.

3. Hubwagenflotte nach Anspruch 2, **dadurch gekennzeichnet, dass** der Befestigungsflansch (16; 17) für das mit der Lastrolle (6) in Wirkverbindung stehende Gestänge (11) seitlich versetzt zu dem Aufnahmeflansch (13) angeordnet ist.

4. Hubwagenflotte nach einem der Ansprüche 1 bis 3, **dadurch gekennzeichnet, dass** der Dreieckshebel (10) als gleichschenkliges Dreieck ausgebildet ist.

5. Hubwagenflotte nach Anspruch 4, **dadurch gekennzeichnet, dass** die Lagerbohrung (15a) des Aufnahmeflansches (15) von der Lagerbohrung (16a) des ersten Befestigungsflansches (16) und die Lagerbohrung (15a) des Aufnahmeflansches (15) von der Lagerbohrung (17a) des zweiten Befestigungsflansches (17) gleiche Abstände aufweisen.

6. Hubwagenflotte nach einem der Ansprüche 1 bis 5, **dadurch gekennzeichnet, dass** die Lageraufnahme (13) von einem inneren Lagerflansch (20a) und einem äußeren Lagerflansch (20b) gebildet ist, wobei der Aufnahmeflansch (15) des Dreieckshebels (10) von einer ersten Aufnahmeplatte (21 a) und einer zweiten, von der ersten Aufnahmeplatte (21a) beabstandeten Aufnahmeplatte (21 b) gebildet ist.

7. Hubwagenflotte nach Anspruch 6, **dadurch gekennzeichnet, dass** in einer ersten Montageposition des Dreieckshebels (10) die erste Aufnahmeplatte (21 a) an der Innenseite des äußeren Lagerflansches (20b) und die zweite Aufnahmeplatte (21 b) an der Innenseite des inneren Lagerflansches (20a) angeordnet ist.

8. Hubwagenflotte nach Anspruch 6 oder 7, **dadurch gekennzeichnet, dass** in einer zweiten Montageposition des Dreieckshebels (10) die zweite Aufnahmeplatte (21 b) an der Innenseite des äußeren Lagerflansches (20b) und die erste Aufnahmeplatte (21 a) an der Innenseite des inneren Lagerflansches (20a) angeordnet ist.

9. Hubwagenflotte nach einem der Ansprüche 6 bis 8, **dadurch gekennzeichnet, dass** in einer dritten Montageposition des Dreieckshebels (10) die zweite Aufnahmeplatte (21 b) an der Außenseite des äußeren Lagerflansches (20b) und der erste Aufnahmeplatte (21 a) an der Außenseite des inneren Lagerflansches (20a) angeordnet ist.

10. Hubwagenflotte nach einem der Ansprüche 6 bis 9, **dadurch gekennzeichnet, dass** in einer vierten Montageposition des Dreieckshebels (10) die erste Aufnahmeplatte (21 a) an der Außenseite des äußeren Lagerflansches (20b) der Lageraufnahme (13) und die zweite Aufnahmeplatte (21 b) an der Außenseite des inneren Lagerflansches (20a) der Lageraufnahme (13) angeordnet ist.

11. Hubwagenflotte nach einem der Ansprüche 1 bis 10, **dadurch gekennzeichnet, dass** an der am Antriebsteil (2) angeordneten Lageraufnahme (13) eine erste Lagerbohrung (13a) und eine zweite von der ersten Lagerbohrung (13a) vertikal beabstandete Lagerbohrung (13b) ausgebildet ist, an denen der Dreieckshebel (10) befestigbar ist.

## Claims

1. Lift truck fleet, in which each lift truck has a drive part (2) and a load part (4) which can be raised relative to the drive part, the load part having two wheel arms (5), which are provided with in each case at least one load roller (6), in each case one lever system (8), which is operatively connected to the load roller and has a triangular lever (10) which is mounted in articulated fashion on the load part (4) and on the drive part (2), being provided for raising the load part (4), identical triangular levers (10) being provided for the different lift trucks in the lift truck fleet, **characterized in that** a single bearing holder (13) for the triangular lever (10) is formed on the drive part (2), the triangular lever (10) being installed in different lift trucks (1) in the lift truck fleet with different wheel arm distances (d1; d2; d3) in different installation positions on the bearing holder (13).

2. Lift truck fleet according to Claim 1, **characterized in that** a holding flange (15), which is provided with a bearing bore (15a), a first fastening flange (16), which is provided with a bearing bore (16a), and a second fastening flange (17), which is provided with a bearing bore (17a), are formed on the triangular lever (10), it being possible for the triangular lever (10) to be fastened on the bearing holder (13) by means of the holding flange (15), for the triangular lever (10) to be mounted in articulated fashion on the load part (4) by means of the first fastening flange (16) or the second fastening flange (17) and for a rod assembly (11), which is operatively connected to the load roller (6), to be fastened on the second fastening flange (17) or the first fastening flange (16).

3. Lift truck fleet according to Claim 2, **characterized in that** the fastening flange (16; 17) for the rod assembly (11) which is operatively connected to the load roller (6) is arranged so as to be laterally offset with respect to the holding flange (15).

4. Lift truck fleet according to one of Claims 1 to 3, **characterized in that** the triangular lever (10) is in the form of an equilateral triangle.

5. Lift truck fleet according to Claim 4, **characterized in that** the distance between the bearing bore (15a) of the holding flange (15) and the bearing bore (16a) of the first fastening flange (16) and the distance between the bearing bore (15a) of the holding flange (15) and the bearing bore (17a) of the second fastening flange (17) are equal.

6. Lift truck fleet according to one of Claims 1 to 5, **characterized in that** the bearing holder (13) is formed by an inner bearing flange (20a) and an outer bearing flange (20b), the holding flange (15) of the triangular lever (10) being formed by a first holding plate (21a) and a second holding plate (21b), which is spaced apart from the first holding plate (21a).

7. Lift truck fleet according to Claim 6, **characterized in that**, in a first installation position of the triangular lever (10), the first holding plate (21a) is arranged on the inside of the outer bearing flange (20b) and the second holding plate (21b) is arranged on the inside of the inner bearing flange (20a).

8. Lift truck fleet according to Claim 6 or 7, **characterized in that**, in a second installation position of the triangular lever (10), the second holding plate (21b) is arranged on the inside of the outer bearing flange (20b) and the first holding plate (21a) is arranged on the inside of the inner bearing flange (20a).

9. Lift truck fleet according to one of Claims 6 to 8, **characterized in that**, in a third installation position of the triangular lever (10), the second holding plate (21b) is arranged on the outside of the outer bearing flange (20b) and the first holding plate (21a) is arranged on the outside of the inner bearing flange (20a).

10. Lift truck fleet according to one of Claims 6 to 9, **characterized in that**, in a fourth installation position of the triangular lever (10), the first holding plate (21a) is arranged on the outside of the outer bearing flange (20b) of the bearing holder (13) and the second holding plate (21b) is arranged on the outside of the inner bearing flange (20a) of the bearing holder (13).

11. Lift truck fleet according to one of Claims 1 to 10, **characterized in that** a first bearing bore (13a) and a second bearing bore (13b), which is spaced apart vertically from the first bearing bore (13a), are formed on the bearing holder (13), which is arranged on the drive part (2), with it being possible for the triangular lever (10) to be fastened on said bearing bores.

## Revendications

1. Flotte de chariots élévateurs, dans laquelle chaque chariot élévateur présente une partie d'entraînement (2) et une partie de charge (4) pouvant être soulevée par rapport à la partie d'entraînement, la partie de charge présentant deux bras de roue (5) qui sont pourvus chacun d'au moins un rouleau de charge (6), un système de levier (8) en liaison fonctionnelle avec le rouleau de charge étant prévu pour soulever la partie de charge (4) et présentant un levier triangulaire (10) qui est monté de manière articulée sur la partie de charge (4) et sur la partie d'entraînement (2), des leviers triangulaires identiques (10) étant prévus pour les différents chariots élévateurs de la flotte de chariots élévateurs, **caractérisée en ce qu'**un logement de palier unique (13) est réalisé pour le levier triangulaire (10) sur la partie d'entraînement (2), le levier triangulaire (10) étant monté dans différents chariots élévateurs (1) de la flotte de chariots élévateurs avec différents intervalles de bras de roue (d1 ; d2 ; d3) dans différentes positions de montage sur le logement de palier (13).

2. Flotte de chariots élévateurs selon la revendication 1, **caractérisée en ce qu'**une bride de réception (15) pourvue d'un alésage de palier (15a), une première bride de fixation (16) pourvue d'un alésage de palier (16a), et une deuxième bride de fixation (17) pourvue d'un alésage de palier (17a) sont réalisées sur le levier triangulaire (10), le levier triangulaire (10) pouvant être fixé au moyen de la bride de réception (15) sur le logement de palier (13), le levier triangulaire (10) pouvant être monté de manière articulée au moyen de la première bride de fixation (16) ou de la deuxième bride de fixation (17) sur la partie de charge (4), et une tringlerie (11) en liaison fonctionnelle avec le rouleau de charge (6) pouvant être fixée sur la deuxième bride de fixation (17) ou sur la première bride de fixation (16).

3. Flotte de chariots élévateurs selon la revendication 2, **caractérisée en ce que** la bride de fixation (16 ; 17) pour la tringlerie (11) en liaison fonctionnelle avec le rouleau de charge (6) est disposée de manière décalée latéralement par rapport à la bride de réception (15).

4. Flotte de chariots élévateurs selon l'une quelconque des revendications 1 à 3, **caractérisée en ce que** le levier triangulaire (10) est réalisé sous forme de triangle isocèle.

5. Flotte de chariots élévateurs selon la revendication 4, **caractérisée en ce que** l'alésage de palier (15a) de la bride de réception (15) est espacé de la même distance respectivement de l'alésage de palier (16a) de la première bride de fixation (16) et de l'alésage de palier (17a) de la deuxième bride de fixation (17).

6. Flotte de chariots élévateurs selon l'une quelconque des revendications 1 à 5, **caractérisée en ce que** le logement de palier (13) est formé par une bride de palier interne (20a) et une bride de palier externe (20b), la bride de réception (15) du levier triangulaire (10) étant formée par une première plaque de réception (21a) et une deuxième plaque de réception (21b) espacée de la première plaque de réception (21a).

7. Flotte de chariots élévateurs selon la revendication 6, **caractérisée en ce que** dans une première position de montage du levier triangulaire (10), la première plaque de réception (21a) est disposée sur le côté intérieur de la bride de palier extérieure (20b) et la deuxième plaque de réception (21b) est disposée sur le côté intérieur de la bride de palier intérieure (20a).

8. Flotte de chariots élévateurs selon la revendication 6 ou 7, **caractérisée en ce que** dans une deuxième position de montage du levier triangulaire (10), la deuxième plaque de réception (21b) est disposée sur le côté intérieur de la bride de palier extérieure (20b) et la première plaque de réception (21a) est disposée sur le côté intérieur de la bride de palier intérieure (20a).

9. Flotte de chariots élévateurs selon l'une quelconque des revendications 6 à 8, **caractérisée en ce que** dans une troisième position de montage du levier triangulaire (10), la deuxième plaque de réception (21b) est disposée sur le côté extérieur de la bride de palier extérieure (20b) et la première plaque de réception (21a) est disposée sur le côté extérieur de la bride de palier intérieure (20a).

10. Flotte de chariots élévateurs selon l'une quelconque des revendications 6 à 9, **caractérisée en ce que** dans une quatrième position de montage du levier triangulaire (10), la première plaque de réception (21a) est disposée sur le côté extérieur de la bride de palier extérieure (20b) du logement de palier (13) et la deuxième plaque de réception (21b) est disposée sur le côté extérieur de la bride de palier intérieure (20a) du logement de palier (13).

11. Flotte de chariots élévateurs selon l'une quelconque des revendications 1 à 10, **caractérisée en ce que** l'on réalise sur le logement de palier (13) disposé sur la partie d'entraînement (2), un premier alésage de palier (13a) et un deuxième alésage de palier (13b) espacé verticalement du premier alésage de palier (13a), auxquels le levier triangulaire (10) peut être fixé.
